(19) **Europäisches Patentamt European Patent Office Office européen des brevets**

(11) **EP 4 773 254 A1**

(12) **EUROPEAN PATENT APPLICATION**
published in accordance with Art. 153(4) EPC

(43) Date of publication:
08.07.2026 Bulletin 2026/28

(21) Application number: 24891813.8

(22) Date of filing: 15.11.2024

(51) International Patent Classification (IPC):
H01M 4/66 (2006.01)     H01M 4/13 (2010.01)
H01M 10/052 (2010.01)

(52) Cooperative Patent Classification (CPC):
H01M 4/13; H01M 4/66; H01M 10/052; Y02E 60/10

(86) International application number:
PCT/KR2024/018107

(87) International publication number:
WO 2025/105867 (22.05.2025 Gazette 2025/21)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 15.11.2023 KR 20230158612

(71) Applicants:
• LG Energy Solution, Ltd.
  Seoul 07335 (KR)
• LG Chem, Ltd.
  Seoul 07336 (KR)

(72) Inventors:
• JANG, Seok-Hoon
  Daejeon 34122 (KR)
• YI, Yeon-Hui
  Daejeon 34122 (KR)
• KO, Kyung-Moon
  Daejeon 34122 (KR)
• PARK, Moon-Soo
  Daejeon 34122 (KR)
• PARK, Joo-Ho
  Daejeon 34122 (KR)
• JUNG, Soon-Hwa
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **CURRENT COLLECTOR FOR DRY ELECTRODE, ELECTRODE INCLUDING SAME, AND LITHIUM SECONDARY BATTERY INCLUDING SAME**

(57) The present disclosure relates to a current collector for a dry electrode including a metal foil for the current collector, and a primer layer on at least one surface of the metal foil, wherein the primer layer includes a binder resin and a conductive material, and wherein the conductive material has a bulk density of 0.055 g/ml or more, and a Brunauer, Emmett and Teller (BET) specific surface area of 100 $m^2$/g or less.

FIG. 1

## Description

<u>TECHNICAL FIELD</u>

The present disclosure relates to a current collector for a dry electrode, an electrode including the same and a lithium secondary battery including the same, and more particularly, to a current collector for a dry electrode having improved resistance characteristics and high adhesion strength between the electrode and the current collector, an electrode including the same and a lithium secondary battery including the same.

This application is based on and claims priority to Korean Patent Application No. 10-2023-0158612 filed on November 15, 2023 with the Korean Intellectual Property Office, the disclosure of which is incorporated herein in its entirety by reference.

<u>BACKGROUND</u>

A manufacturing process of a lithium secondary battery largely includes three steps: an electrode process, an assembly process and a formation/ageing process, and the electrode process includes the following sub-steps: an active material mixing process, an electrode coating process, a drying process, a rolling process, a slitting process and a winding process. Among them, the active material mixing process is a process of mixing coating materials for formation of an electrode active material layer in which electrochemical reaction occurs in the electrode, and an electrode active material which is the essential element of the electrode is mixed with a conductive material, a filler, a binder resin and a solvent for imparting viscosity and dispersing the power to prepare a flowable slurry composition. Subsequently, the electrode coating process of applying the slurry composition to a current collector having electrical conductivity and the drying process for removing the solvent from the slurry composition, followed by rolling, are performed to manufacture the electrode with a predetermined thickness.

Meanwhile, as the solvent contained in the slurry composition evaporates in the drying process, defects such as pin holes or cracks may occur in the already formed electrode active layer. Additionally, the active layer is not uniformly dried all over the entire inner/outer area, and due to a difference in solvent evaporation rate, some regions get dry earlier and the powder at the corresponding regions floats, and some other regions get dry later at a time interval, resulting in low quality of the electrode. To solve this problem, efforts have been devoted to dryers for uniformly drying the inner and outer area of the active layer and adjusting the solvent evaporation rate, but these dryers are very expensive and require a considerate amount of costs and time to operate them, so it is disadvantageous in terms of manufacturing process. Accordingly, recently, many studies are being made to manufacture dry electrodes without solvents.

As opposed to wet electrodes, due to poor adhesion strength at the interface between the current collector and the electrode, the dry electrode requires a primer layer having electrical conductivity to impart adhesion strength at the interface between the current collector and the electrode active material layer. For electrical conductivity, the primer layer includes a conductive material in a predetermined amount or more, and for sufficient adhesion strength at the interface between the electrode and the current collector, the primer layer includes a binder in a predetermined amount or more. Meanwhile, when the conductive material is included in an excessively large amount to increase electrical conductivity, battery characteristics become worse, and when the binder is used in an excessively large amount to increase the adhesion strength at the interface, procedural problems may occur such as distortion of a metal foil for the current collector in a roll-to-roll process, electrode detachment and separation, or the primer layer stuck on the roll. Accordingly, there is a growing need for development of a current collector for a dry electrode with improved resistance characteristics and adhesion strength, in which the conductive material and the binder in the primer layer are not included in excessively large amounts.

<u>SUMMARY</u>

<u>Technical Problem</u>

The present disclosure is designed to solve the above-described problems, and therefore the present disclosure is directed to providing a current collector for a dry electrode having improved resistance characteristics and adhesion strength with the electrode, an electrode including the same and a lithium secondary battery including the same.

<u>Technical Solution</u>

According to an aspect of the present disclosure, there is provided a current collector for a dry electrode including a metal foil for the current collector, and a primer layer on at least one surface of the metal foil, wherein the primer layer includes a binder resin and a conductive material, and wherein the conductive material has a bulk density of 0.055 g/ml or more, and a Brunauer, Emmett and Teller (BET) specific surface area of 100 m$^2$/g or less.

A ratio of the bulk density of the conductive material to a true density of the binder resin may be 0.06 or more.

The primer layer may include the binder resin and the conductive material at a weight ratio of from 20:80 to 80:20.

The conductive material may have an average particle size ($d_{50}$) of 30 nm or more.

The conductive material may have an increasing concentration gradient in a direction toward the current collector along a thickness direction of the primer layer.

The conductive material may include a carbon material.

The primer layer may include the binder resin in an amount of 20 wt% or more based on a total weight of the primer layer.

The binder resin may have a glass transition temperature (Tg) between -40°C and 25°C or between -30°C and 20°C, between -25°C and 10°C or between -20°C and 0°C. When the glass transition temperature of the binder resin satisfies the aforementioned range, adhesion strength with the electrode may be improved.

The binder resin may include at least one selected from the group consisting of a styrene butadiene rubber (SBR), a butadiene rubber (BR), a nitrile butadiene rubber (NBR), a styrene butadiene styrene block copolymer (SBS), a styrene ethylene butadiene block copolymer (SEB), a styrene-(styrene butadiene)-styrene block copolymer, a natural rubber (NR) and an isoprene rubber (IR).

According to another aspect of the present disclosure, there is provided an electrode including the current collector for the dry electrode as described above, and an electrode active material layer on at least one surface of the current collector for the dry electrode.

The electrode active material layer may include composite particles for the electrode, a powder for the electrode or a combination thereof.

According to another aspect of the present disclosure, there is provided a lithium secondary battery including a positive electrode, a negative electrode, a separator between the positive electrode and the negative electrode, and an electrolyte, wherein at least of the positive electrode or the negative electrode includes the current collector for the dry electrode as described above.

Advantageous Effects

The current collector for the dry electrode according to the present disclosure may have improved adhesion strength at the interface between the current collector and the electrode and improved resistance characteristics.

The current collector for the dry electrode according to the present disclosure in which the conductive material having large particle size is used, may have improved resistance characteristics at the interface between the current collector and the electrode by adjusting the bulk density of the conductive material and the true density of the binder resin.

Additionally, the electrode according to the present disclosure may exhibit battery characteristics of improved adhesion strength at the interface between the current collector and the electrode and improved resistance characteristics due to high distribution of the conductive material in the current collector near the metal foil for the current collector and high distribution of the binder resin near the electrode active material.

The electrode according to the present disclosure may have improved resistance characteristics at the interface between the current collector and the electrode active material layer by adjusting the bulk density of the conductive material and the true density of the binder resin in the current collector in which the conductive material having large particle size is used.

The electrode according to the present disclosure including the electrode active material layer manufactured by the dry method on the current collector for the dry electrode may have improved resistance characteristics, compared to an electrode including an electrode active material layer manufactured by the wet method.

Additionally, the lithium secondary battery according to the present disclosure including the current collector according to the present disclosure may have improved battery characteristics.

BRIEF DESCRIPTION OF THE DRAWINGS

The accompanying drawings illustrate the exemplary embodiments of the present disclosure and together with the detailed description, serve to describe the principle of the present disclosure, and the scope of the present disclosure is not limited thereto. In the drawings, for clarity of description, the shape, size, scale or proportion of the elements may be exaggerated for emphasis.

FIG. 1 is a cross-sectional view of an electrode according to an embodiment of the present disclosure.

FIGS. 2a to 2c show discharge resistance vs SoC by a hybrid pulse power characterization (HPPC) test for each monocell of Experimental Example 5 and Comparative Example 3.

DETAILED DESCRIPTION

Hereinafter, the present disclosure will be described in detail. It should be understood that the terms or words used in the specification and the appended claims should not be construed as being limited to general and dictionary meanings, and rather, should be interpreted based on the meanings and concepts corresponding to the technical aspect of the present disclosure on the basis of the principle that the inventor is allowed to define the terms appropriately for the best explanation.

Therefore, the embodiments described herein are provided to describe an exemplary embodiment of the present disclosure for illustrative purposes but not intended to specify the technical aspect of the present disclosure completely and thoroughly, so it should be understood that a variety of other equivalents and modifications could have been made thereto at the time the application was filed.

<Definition>

The term "comprise", "include" or "have" when used in this specification, specifies the presence of stated elements, but does not preclude the presence or addition of one or more other elements, unless the context clearly indicates otherwise. The term "comprise" includes "consist of" and "essentially comprise" but is not particularly limited thereto.

The terms 'about' and 'substantially' as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout this specification, 'A and/or B' refers to either A or B or both.

The terminology as used herein is for the purpose of convenience, but not intended to be limiting. For example, the terms 'upper', 'lower', 'left', 'right', 'front', 'rear', 'inner' and 'outer' may be used to describe relative locations or directions between elements rather than absolute positions. These terms include words including them and derivatives and synonyms thereof as well.

The term "glass transition temperature Tg" as used herein is measured by methods commonly used in the corresponding field, and for example, may be measured by differential scanning calorimetry (DSC). For example, the glass transition temperature measurement by DSC may be performed by measuring the amount of heat at varying temperatures in a range between -80°C and 300°C by using TA Instruments Discovery DSC 250. Specifically, the measurement may be performed on a target sample at varying temperatures of 25°C(start)-> 250°C(first heating)-> -80°C(first cooling)-> 300°C at the rate of 10°C/min in an order of first heating->first cooling->second heating. In this instance, the first heating may be carried out to evaporate moisture remaining on the sample, and the first cooling and the second heating may be carried out to analyze thermal behaviors from a heat thermogram.

The "specific surface area" as used herein may refer to a value measured by the Brunauer-Emmett-Teller (BET) method and specifically, may be calculated from the amount of nitrogen adsorbed under the liquid nitrogen temperature (77K) by using BEL Japan's BELSORP-mini II.

The term "particle diameter (particle size) $d_{50}$" as used herein refers to a particle size at 50% of cumulative particle size distribution of particles. The particle diameter d50 may be measured using a laser diffraction method. For example, the particle diameter d50 may be measured by dispersing particles in a dispersion medium, feeding it into a commercially available laser diffraction particle size measurement device (for example, Microtrac MT 3000), irradiating ultrasound waves of about 28 kHz with the output of 60 W to obtain a cumulative particle size distribution graph and measuring a particle size at 50% of the cumulative particle size distribution of particles. Alternatively, the particle diameter $d_{50}$ may be measured in accordance with ISO 9276.

The "thickness" of each layer included in the electrode as used herein may indicate a value measured by a commonly used thickness measurement method. The thickness may be, for example, a value measured using a thickness measurement device (Mitutoyo, VL-50S-B) although the thickness measurement method is not limited thereto.

The term "porosity" as used herein refers to a fraction of voids in a structure over the total volume and is indicated in vol%, and may be used interchangeably with void fraction, void ratio or the like. In the present disclosure, the measurement of the porosity is not limited to a particular method, and according to an embodiment of the present disclosure, for example, the porosity may be measured by the BET method using nitrogen gas, Hg porosimeter or ASTM D-2873. Alternatively, the true density of the electrode may be calculated from the density (bulk density) of the electrode, a composition ratio of materials included in the electrode and the density of each component, and the porosity of the electrode may be calculated from a difference between the bulk density and the true density (net density). For example, the porosity may be calculated by Equation 1 below.

[Equation 1]

$$\text{Porosity (volume\%)} = \{1-(\text{bulk density/true density})\} \times 100$$

In the above Equation 1, the bulk density (for example, the bulk density of the electrode) may be calculated from Equation 2 below.

Bulk density (g/cm$^3$) = (weight of electrode (g))/{(thickness of electrode (cm))x(area of electrode (cm$^2$))} [Equation 2]

The bulk density or apparent density is a measure of how much space a material occupies per unit volume, including voids or empty spaces included in it. That is, the bulk density includes the material in solid state and the voids within its volume. The bulk density may be calculated by dividing the mass of the material by its total volume. All the pores or empty spaces in the material are included. For example, the bulk density of the material may be calculated by Equation 3 below.

[Equation 3]

$$\text{Bulk density (g/ml)} = \text{mass (g) / total volume (ml)}$$

The mass may be measured using a scale. In the case of a regularly shaped material (for example, a cube, a cylinder, etc.), the corresponding dimension may be measured using a suitable tool such as a tape measure or calipers as commonly used in the art. In the case of an irregularly shaped sample, the volume may be measured by determining a change in volume by measuring liquid displacement. The change in volume may be equal to the volume of the material. Those skilled in the art may use any other commonly used method for measuring the volume or bulk density.

The true density or net density refers to density of a material, in which voids or pores included in the material are not considered. It is a value obtained by dividing the mass of a solid material by its actual volume, excluding empty spaces from the volume. The true density may be calculated by dividing the mass of the material by the solid, non-empty volume. For example, the true density of the material may be calculated by Equation 4 below.

True density(g/ml) = mass (g) / solid volume (void volume is not considered, unit: ml) [Equation 4]

As opposed to the bulk density, the true density which does not consider the total volume including voids, indicates an intrinsic density of a material. The true density may be determined by the above-mentioned method, or using gas volknometry in accordance with ISO 12154:2014 or any other measurement method known to those skilled in the art.

A lithium secondary battery according to the present disclosure may be included in a battery module as a unit cell, and the battery module may be used in a battery pack and a device including the battery pack as a power source. Specific examples of the device may include an electric vehicle, a hybrid electric vehicle, a plug-in hybrid electric vehicle or an energy storage system, but is not limited thereto.

<Current collector for dry electrode>

The present disclosure provides a current collector for a dry electrode.

In an embodiment of the present disclosure, the current collector for the dry electrode includes a metal foil for the current collector, and a primer layer on at least one surface of the metal foil, and the primer layer includes a binder resin and a conductive material.

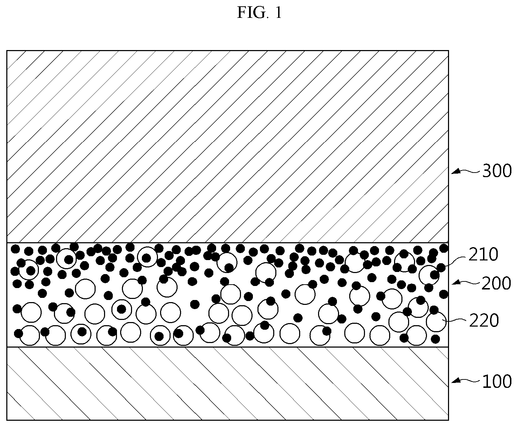

FIG. 1 is a cross-sectional view of a dry electrode according to an embodiment of the present disclosure. Referring to FIG. 1, the dry electrode includes the current collector including the metal foil 100 and the primer layer 200 and an electrode active material layer 300 on the surface of the current collector, and the primer layer 200 includes the binder resin 210 and the conductive material 220.

In this specification, on the basis of the thickness direction of the primer layer 200, a direction close to the metal foil 100 is referred to as lower, and a direction close to the electrode active material layer 300 is referred to as upper. In the present disclosure, the upper part may refer to an area corresponding to top 50% of the thickness of the primer layer 200, and the lower part may refer to an area corresponding to bottom 50% of the thickness of the primer layer 200. Additionally, in the primer layer 200, a surface of contact with the electrode active material layer 300 may be referred to as a first surface (an electrode active material layer contact surface), and a surface of contact with the metal foil 100 may be referred to as a second surface (a metal foil contact surface).

In an embodiment of the present disclosure, the metal foil for the current collector is not limited to a particular material and may include any material having conductivity without causing any chemical change in the battery, for example, copper, stainless steel, aluminum, nickel, titanium, sintered carbon, copper or stainless steel treated with carbon, nickel, titanium or silver on the surface, or aluminum-cadmium alloy.

The current collector may have the microtextured surface to increase the adhesion strength of the active material, and may come in different forms, for example, film, sheet, foil, net, porous body, foam or non-woven. Meanwhile, in an embodiment of the present disclosure, the current collector may have a thickness of from 4 $\mu$m to 25 $\mu$m but the thickness is not limited to a particular range. The thickness of the current collector may range, for example, from 6 $\mu$m to 20 $\mu$m.

In an embodiment of the present disclosure, the sum of amounts of the binder and the conductive material in the primer layer may be specifically 91 wt% or more, 92 wt% or more, 93 wt% or more, 94 wt% or more, 95 wt% or more, 96 wt% or more, 97 wt% or more, 98 wt% or more, 99 wt% or more, 100 wt% or less, 99 wt% or less, 98 wt% or less, 95 wt% or less, 93 wt% or less, based on the total weight of the primer layer.

In an embodiment of the present disclosure, the primer layer includes the binder and the conductive material, and may further include a dispersant.

In an embodiment of the present disclosure, the primer layer includes the binder and the conductive material, but may not substantially include the dispersant. The primer layer 'not substantially including the dispersant' may represent that the primer layer does not include the dispersant, as well as that the primer layer includes the dispersant in such a small amount that the function of the dispersant, i.e., the function of dispersing the binder and the conductive material is not implemented. For example, when the primer layer includes the dispersant, the dispersant may be included in an amount of 6 wt% or less, 5 wt% or less, 4 wt% or less, 3 wt% or less, 2 wt% or less, 1 wt% or less, 0.5 wt% or less or 0.05 wt% or less, and preferably 0 wt% (i.e., none) based on the total weight of the primer layer.

In an embodiment of the present disclosure, the dispersant may decompose when exposed to air, causing time-dependent changes to the primer layer. The dispersant may include, for example, a cellulose-based polymer, an emulsion-type surfactant or two or more of them.

In an embodiment of the present disclosure, the cellulose-based polymer may include, for example, carboxymethylcellulose (CMC), an alkali metal salt of carboxymethylcellulose, hydroxymethylcellulose (HMC), an alkali metal salt of hydroxymethylcellulose, hydroxyethylcellulose (HEC), an alkali metal salt of hydroxyethylcellulose, hydroxypropylcellulose (HPC), an alkali metal salt of hydroxypropylcellulose, ethylhydroxyethylcellulose (EHEC), methylhydroxymethylcellulose (MHMC), methylhydroxyethylcellulose (MHEC), ethylhydroxymethylcellulose (EHMC), methylcellulose (MC), ethylcellulose (EC), hydroxypropylmethylcellulose (HPMC), hydroxyethylmethylcellulose (HEMC) or a mixture thereof.

In an embodiment of the present disclosure, the emulsion-type surfactant may include, for example, a nonionic surfactant, an anionic surfactant, an amphoteric surfactant or a mixture thereof, but is not limited thereto. The nonionic surfactant may include, for example, ethoxylates, amide ethoxylates, amine oxides, alkyl glucosides or a mixture thereof, but is not limited thereto. The anionic surfactant may include, for example, phosphate esters, isothionates, sulfates, sulfonates, taurates or a mixture thereof, but is not limited thereto. The amphoteric surfactant may include betaines, glycinates, alkylamido alkylamines or a mixture thereof.

In an embodiment of the present disclosure, the primer layer may not substantially include the cellulose-based polymer as the dispersant.

In an embodiment of the present disclosure, the primer layer may not substantially include carboxymethylcellulose, hydroxypropylmethylcellulose or a mixture thereof as the dispersant.

In an embodiment of the present disclosure, the primer layer may not substantially include the emulsion-type surfactant as the dispersant.

In an embodiment of the present disclosure, the conductive material is not limited to a particular type and may include any type of conductive material commonly used in the primer layer.

In an embodiment of the present disclosure, the bulk density of the conductive material is 0.055 g/ml or more.

In an embodiment of the present disclosure, the bulk density of the conductive material may be 0.06 g/ml or more, or 0.065 g/ml or more, and may be 0.5 g/ml, 0.4 g/ml, 0.3 g/ml or 0.2 g/ml or less. Because the bulk density of the conductive material is not a unique value of the conductive material, the bulk density of the conductive material may change depending on a method for treating the conductive material. In this instance, when the bulk density of the conductive material satisfies the aforementioned range, as the conductive material moves in the second surface direction and the binder resin moves in the first surface direction, adhesion strength between the current collector and the electrode active material layer may be increased and resistance characteristics may be improved. Specifically, when the bulk density of the conductive material satisfies the aforementioned numerical range, the binder resin may have higher distribution in the first surface direction of the electrode active material layer (i.e., opposite to the gravity direction), and the conductive material may have higher distribution in the second surface direction (i.e., gravity direction) of the interface between the current collector and the primer layer. Meanwhile, the process of manufacturing the dry electrode may involve compaction with the primer layer and the electrode active material layer in the current collector for the dry electrode being brought into contact with each other, and in this instance, adhesion strength at the interface between the current collector and the electrode may be improved by the contact between the binder resin and the electrode active material layer, and the conductive material may become denser and closer together by the compaction, leading to improved resistance characteristics. Meanwhile, when the bulk density of the conductive material is above the upper limit, dispersion may be reduced when forming the primer layer, or it may be difficult to adjust the thickness of the primer layer. Additionally, a large difference in density between the conductive material and the binder may result in extreme distributions of the conductive material and the binder and low conductivity of the primer layer itself.

In an embodiment of the present disclosure, the BET specific surface area of the conductive material is 100 m$^2$/g or less.

In an embodiment of the present disclosure, the BET specific surface area of the conductive material may be 90 m$^2$/g or less, or 80 m$^2$/g or less, and the BET specific surface area may be 5 m$^2$/g or more, 10 m$^2$/g or more, or 15 m$^2$/g or more. The BET specific surface area may refer to a specific surface area of the conductive material measured by adsorbing gas onto the conductive material. In this instance, when the BET specific surface area satisfies the aforementioned range, as the conductive material moves in the second surface direction and the binder resin moves in the first surface direction, adhesion strength between the current collector and the electrode active material layer may be increased and resistance characteristics may be improved. Specifically, when the BET specific surface area of the conductive material satisfies the aforementioned numerical range, the binder resin may have higher distribution in the first surface direction of the electrode active material layer (i.e., opposite to the gravity direction), and the conductive material may have higher distribution in the second surface direction (i.e., gravity direction) of the interface between the current collector and the primer layer. Meanwhile, the process of manufacturing the dry electrode may involve compaction with the primer layer and the electrode active material layer in the current collector for the dry electrode being brought into contact with each other, and in this instance, adhesion strength at the interface between the current collector and the electrode may be improved by the contact between the binder resin and the electrode active material layer, and the conductive material may become denser and closer together by the compaction, leading to improved resistance characteristics.

In an embodiment of the present disclosure, the binder resin may have the true density of from 0.9 g/ml to 1.1 g/ml.

In an embodiment of the present disclosure, a ratio of the bulk density of the conductive material to the true density of the binder resin (the bulk density of the conductive material/the true density of the binder resin) may be, for example, 0.06 or more, 0.065 or more, 0.07 or more, 0.08 or more, 0.09 or more, or 0.1 or more, and may be 0.6 or less, 0.5 or less, 0.4 or less, 0.3 or less, or 0.25 or less. When the ratio of the bulk density of the conductive material to the true density of the binder resin satisfies the aforementioned numerical range, the particle size of the conductive material may increase, but higher distribution of the conductive material and the binder resin on the second surface and the first surface, respectively may lead to the increased contact area of the conductive material, thereby forming uniform conductive networks, and may lead to the increased contact area with the active material, thereby forming conductive networks. Accordingly, it may be possible to provide the current collector for the dry electrode having improved interfacial resistance, in which the conductive material of large particle size is used. Additionally, when the particle size of the binder resin increases, and the ratio of the bulk density of the conductive material to the true density of the binder resin (the bulk density of the conductive material/the true density of the binder resin) satisfies the aforementioned range, the adhesion strength (the electrode-the current collector adhesion strength) and the electrode interfacial resistance may be improved.

In an embodiment of the present disclosure, the true density may be, for example, measured using Pycnometer (AccuPycII 1340) and the measurement method is not limited to a particular one. The true density refers to the density of a solid material to its volume in a porous solid, excluding pores. Meanwhile, the bulk density refers to the density to its volume of an object including voids between particles when powder or fibers are packed into a container. The bulk density may be obtained by calculating the mass (g) of the conductive material to the volume (ml) of the conductive material and the measurement method of the bulk density is not limited to a particular one. The bulk density may be, for example, measured using JJ-Test's bulk density tester (cylinder volume 100 cm$^3$).

The primer layer of the present disclosure includes the binder resin and the conductive material, and the ratio of amounts of the conductive material and the binder resin as a function of thickness in the primer layer may differ according to the ratio of the density (in particular, the bulk density) of the conductive material to the density (in particular, the true density) of the binder resin. Specifically, with the increasing ratio of the density (in particular, the bulk density) of the conductive material to the density (in particular, the true density) of the binder resin, the amount of the conductive material in the primer layer may have an increasing distribution in the gravity direction (generally, the current collector direction) at the time of manufacture. In this instance, the true density of the binder resin may have the aforementioned range, and due to a relatively large difference between the true density of the binder resin and the bulk density of the conductive material, when the conductive material satisfies the predetermined bulk density and the predetermined BET specific surface area, the effect of the present disclosure, i.e., battery characteristics of improved adhesion strength at the interface between the current collector and the electrode and improved resistance characteristics may be achieved. Meanwhile, in another embodiment of the present disclosure, the ratio obtained by dividing the bulk density of the conductive material by the true density of the binder resin (the bulk density of the conductive material/the true density of the binder resin) may be more consistent with the tendency of the conductive material content in the primer layer to increase in the gravity direction (generally the current collector direction) during manufacture.

In an embodiment of the present disclosure, the primer layer may include the binder resin and the conductive material at a weight ratio of from 20:80 to 80:20, from 25:75 to 75:25, or from 30:70 to 70:30. When the weight ratio of the binder resin and the conductive material satisfies the aforementioned range, adhesion strength at the interface between the current collector and the electrode may be increased and resistance characteristics may be improved.

In an embodiment of the present disclosure, the conductive material may have an average particle size $d_{50}$ of 30 nm or more, 33 nm or more, or 35 nm or more, and 5000 nm or less, 4500 nm or less, or 4000 nm or less. When the average particle size of the conductive material satisfies the aforementioned range, it may be possible to achieve large contact area of the conductive material, form uniform conductive networks, and achieve large contact area with the electrode active material.

In an embodiment of the present disclosure, the conductive material may have a spherical, quasi-spherical, platy or tubular shape.

In an embodiment of the present disclosure, the conductive material may include a carbon material. For example, the conductive material may include, as the carbon material, graphite such as natural graphite or artificial graphite; carbon black-based carbon compounds such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide or potassium titanate; conductive metal oxide such as titanium oxide; conductive materials such as polypheneylene derivatives, but preferably, may include acetylene black, carbon black or a combination thereof.

In an embodiment of the present disclosure, in the conductive material satisfying the predetermined bulk density and the predetermined BET specific surface area, when drying a primer layer slurry, as the conductive material may move in a direction toward the surface of the current collector (generally, gravity direction), and the binder resin may move toward the electrode active material, then the conductive material may have an increasing concentration gradient in a direction toward the current collector along the thickness direction of the primer layer.

In an embodiment of the present disclosure, the binder resin is not limited to a particular type and may include any type of binder commonly used in the primer layer.

In an embodiment of the present disclosure, the primer layer may include the binder resin in an amount of 20 wt% or more, 25 wt% or more, or 27 wt% or more, and 80 wt% or less, 75 wt% or less, or 70 wt% or less based on the total weight of the primer layer. When the primer layer includes the binder resin in the aforementioned range of amounts, it may be possible to ensure time-dependent stability of the primer layer.

In an embodiment of the present disclosure, the glass transition temperature (Tg) of the binder resin may range from -40 °C to 25 °C, from -30 °C to 20 °C, from -25 °C to 10°C or from -20°C to 0°C. When the glass transition temperature of the binder resin satisfies the aforementioned range, it may be possible to ensure time-dependent stability of the primer layer, and improve the adhesion strength at the interface between the current collector and the electrode.

In an embodiment of the present disclosure, the binder resin may include at least one selected from the group consisting of a styrene butadiene rubber (SBR), a butadiene rubber (BR), a nitrile butadiene rubber (NBR), a styrene butadiene styrene block copolymer (SBS), a styrene ethylene butadiene block copolymer (SEB), a styrene-(styrene butadiene)-styrene block copolymer, a natural rubber (NR) and an isoprene rubber (IR).

<Method for manufacturing current collector for dry electrode>

In an embodiment of the present disclosure, the current collector for the dry electrode may be manufactured by a method including the steps of mixing the conductive material and the binder resin in a dispersion medium to prepare the primer layer slurry; applying the primer layer slurry to at least one surface of the metal foil; and drying the metal foil coated with the slurry by heating.

First, the conductive material and the binder resin, and optionally the dispersant were dispersed or dissolved in the dispersion medium to obtain the slurry. In this instance, the conductive material, the binder resin and the dispersant are the same as described above, and their description is omitted.

In an embodiment of the present disclosure, the binder resin in an aqueous emulsion state may be added to the dispersion medium. In this instance, the binder resin may maintain the particle shape.

In an embodiment of the present disclosure, the conductive material in an aqueous emulsion state may be added to the dispersion medium. In this instance, the conductive material may maintain the particle shape.

The dispersion medium used to obtain the slurry includes, the most suitably, water, but may include an organic solvent. The organic solvent may include, for example, alkylalcohols such as methylalcohol, ethylalcohol or propylalcohol; alkylketones such as acetone or methylethylketone; ethers such as tetrahydrofuran, dioxane or diglyme; amides such as diethylformamide, dimethylacetoamide, N-methyl-2-pyrrolidone (hereinafter, referred to as NMP), dimethylimidazolidinone; sulfur-based solvents such as dimethylsulfoxide or sulfolane; and alcohols are preferred. The use in combination with the organic solvent having lower boiling point than water may increase the drying speed. Additionally, because the binder resin may change in dispersibility or solubility, the viscosity or flowability of the slurry may be adjusted according to the amount or type of the dispersion medium, thereby improving production efficiency.

The conductive material and the binder resin may be dispersed or dissolved in the dispersion medium by any method or order, and the method may include, for example, a method that adds the conductive material and the binder resin to the dispersion medium and mixes them together, or a method that dissolves or disperses the conductive material in the dispersion medium and adds the binder resin and mixes them together. The mixing means may include, for example, a ball mill, a sand mill, a bead mill, a pigment dispersion machine, a stone mill, an ultrasonic dispersion machine, a homogenizer or a planetary mixer. The mixing may be performed, for example, in a range between room temperature and 80°C for 10 minutes to a few hours.

Subsequently, the slurry is applied to at least one surface of the metal foil. In this instance, the metal foil is the same as described above, and its description is omitted.

Subsequently, the metal foil coated with the slurry is dried by heating in a temperature range between 80°C and 140°C for 5 minutes or less. At the heating and drying step, when the dispersion medium in the slurry evaporates, by rearrangement due to the bulk density and specific surface area of the conductive material included in the primer layer or the density difference of the conductive material and the binder resin, in particular, the difference (ratio) of the bulk density of the conductive material to the true density of the binder resin, the conductive material may move in the second surface direction along the gravity direction, and the binder resin may make relative movement in the first surface direction, thereby improving the adhesion strength between the current collector and the electrode active material layer and resistance characteristics.

Meanwhile, at the heating and drying step, as the dispersion medium in the primer layer evaporates, the thickness of the primer layer may decrease, and the bulk density of the primer layer may increase.

Meanwhile, even after the heating and drying step, the ratio of amounts of the conductive material and the binder resin in the slurry may be equal to the ratio of amounts of the conductive material and the binder resin in the primer layer that will be formed afterwards.

In an embodiment of the present disclosure, the conductive material may maintain the particle shape in the primer layer, or have a shape of some fractured particles.

In an embodiment of the present disclosure, the binder resin may maintain the particle shape in the primer layer, or have a shape of some fractured particles.

In an embodiment of the present disclosure, the step of heating the metal foil coated with the slurry may further include the compaction step simultaneously with the heating step, before the heating step, and/or after the heating step.

<Dry electrode>

The present disclosure provides the electrode including the above-described current collector for the dry electrode and the electrode active material layer on at least one surface of the current collector for the dry electrode.

The electrode active material layer includes an electrode active material and an electrode binder, and if necessary, may further include an electrode conductive material.

In a specific embodiment of the present disclosure, the electrode active material layer includes composite particles for the electrode, and the composite particles for the electrode include the electrode active material and the electrode binder, and if necessary, may further include the electrode conductive material. When the composite particles for the electrode are introduced into the electrode, the aspect ratio or particle size range may not maintain the initial condition by a calendering process as described below. The electrode active material layer may include the composite particles in an amount of 80 wt% or more, 90 wt% or more, 95 wt% or more, or 99 wt% or more based on 100 wt% of the electrode active material layer. Meanwhile, in an embodiment, the electrode active material layer may further include an electrode active material, an electrode binder or an electrode conductive material that is not included in the composite particles by granulation and are present in free state.

In a specific embodiment of the present disclosure, the electrode active material layer may include powder for the electrode, and the powder for the electrode may include the electrode active material, the electrode conductive material and the electrode binder. The powder for the electrode may be shaped into a film and included in the dry electrode.

The electrode active material layer may have pores provided by interstitial volume between the composite particles, and exhibit porous properties derived from this structure. In an embodiment of the present disclosure, the electrode active material layer preferably has the porosity of from 20 vol% to 40 vol% in view of electrolyte wettability, shape stability and ionic conductivity.

Meanwhile, according to an embodiment of the present disclosure, the thickness of the electrode active material layer may range, for example, from 30 $\mu$m to 300 $\mu$m, but is not limited thereto.

According to another embodiment of the present disclosure, the electrode active material layer may be a single layer including a single unit active material layer.

According to another embodiment of the present disclosure, the electrode active material layer may have a multilayer structure including a stack of two or more unit active material layers. In this instance, the electrode material included in each unit active material layer, for example, the electrode active material and the electrode binder may be identical or different for each layer, but is not limited thereto. Additionally, if necessary, each layer may include the electrode conductive material, and in this instance, the electrode conductive material of each layer may be identical or different.

Meanwhile, in the present disclosure, the electrode may be a negative or positive electrode, and preferably a negative electrode.

In an embodiment of the present disclosure, the negative electrode active material may include, for example, carbon including non-graphitizing carbon or graphite-based carbon such as natural graphite or artificial graphite; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, Groups 1, 2 and 3 elements in the periodic table, halogen; $0 < x \leq 1$; $1 \leq y \leq 3$; $1 \leq z \leq 8$); lithium metal; lithium alloy; silicon-based alloy; tin-based alloy; silicon-based oxide such as SiO, SiO/C, $SiO_2$; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymer such as polyacetylene; Li-Co-Ni based material, but is not limited thereto.

In an embodiment of the present disclosure, the positive electrode active material may include lithium transition metal oxide; lithium metal iron phosphate; lithium nickel-manganese-cobalt oxide; oxide with partial substitution by other transition metal in lithium nickel-manganese-cobalt oxide; or two or more of them, but is not limited thereto. Specifically, the positive electrode active material may include, for example, layered compounds such as lithium cobalt oxide ($LiCoO_2$), lithium nickel oxide ($LiNiO_2$) or compounds with one or more transition metal substitution; lithium manganese oxide of Formula $Li_{1+x}Mn_{2-x}O_4$ (x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni-site lithium nickel oxide represented by Formula $LiNi_{1-x}M_xO_2$ (M = Co, Mn, Al, Cu, Fe, Mg, B or Ga, x = 0.01 to 0.3); lithium manganese composite oxide represented by Formula $LiMn_{2-x}M_xO_2$ (M = Co, Ni, Fe, Cr, Zn or Ta, x = 0.01 to 0.1) or $Li_2Mn_3MO_8$ (M = Fe, Co, Ni, Cu or Zn); $Li_{1+x}(Ni_aCo_bMn_cAl_a)_{1-x}O_2$ with partial substitution of aluminum ion for Li in the Formula (x = 0 to 0.03, a = 0.3 to 0.95, b = 0.01 to 0.35, c = 0.01 to 0.5, d = 0.001 to 0.03, a+b+c+d=1); lithium metal phosphate $LiM_PO_4$ (M = Fe, CO, Ni, or Mn), disulfide compounds; $Fe_2(MoO_4)_3$, but is not limited thereto.

In an embodiment of the present disclosure, the electrode conductive material is not limited to a particular type and may include those having conductivity without causing any chemical change in the corresponding battery.

The electrode conductive material is not limited to a particular type and may include any material having conductivity without causing any chemical change in the corresponding battery, and may include, for example, graphite such as natural graphite or artificial graphite; carbon black such as carbon black, acetylene black, Ketjen black, channel black, furnace black, lamp black or thermal black; conductive fibers such as carbon fibers or metal fibers; fluorocarbon; metal powder such as aluminum or nickel powder; conductive whiskers such as zinc oxide or potassium titanate; conductive metal oxide such as titanium oxide; and conductive materials such as polyphenylene derivatives, but specifically, for uniform mixing of the electrode conductive material and improved conductivity, may include at least one selected from the group consisting of activated carbon, graphite, carbon black and carbon nanotubes, and more specifically, activated carbon.

In an embodiment of the present disclosure, the electrode binder is not limited to a particular type and may include those for uniform distribution of the electrode active material and the conductive material in powder state without causing any chemical change in the corresponding battery. For example, the electrode binder may include diene-based polymer, acrylate-based polymer, fluorine-based polymer, styrene-based polymer or two or more of them.

Examples of the diene-based polymer may include polymer including a monomer unit derived from conjugated diene such as butadiene or isoprene and its hydrogenated form. A ratio of the conjugated diene-derived monomer unit in the diene-based polymer may be usually 40 wt% or more, preferably 50 wt% or more, and more preferably 60 wt% or more.

Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as acrylonitrile-butadiene copolymer (NBR); hydrogenated SBR, hydrogenated NBR.

The styrene-based polymer may include polymer having a styrene monomer-derived repeating unit, for example, a styrene homopolymer (polystyrene) or a styrene copolymer. Examples of the styrene copolymer may include block copolymers such as a styrene-ethylene-butadiene copolymer, a styrene-butadiene-propylene copolymer, a styreneisoprene copolymer, a styrene acrylate-n-butyl itaconate-methyl methacrylate-acrylonitrile copolymer, a styrene-butadiene block copolymer, a styrene-butadiene-styrene·block copolymer, a styrene-ethylene-butylene-styrene·block copolymer, a styrene-isoprene·block copolymer, or a styrene-ethylene-propylene-styrene·block copolymer.

Example of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific example of the acrylate-based polymer may include cross-linked acrylate-based polymer such as an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacylate copolymer, an acrylic acid 2-ethylhexyl-styrene-methacrylic acid-ethyleneglycoldimethacylate copolymer, a butyl acrylate-acrylonitrile-diethyleneglycoldimethacylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, or methacrylic acid. Besides, the copolymer of ethylene and (meth)acrylic acid such as an ethylene-acrylic acid copolymer or an ethylene-methacrylic acid copolymer may be used as a dispersive binder.

The fluorine-based polymer may include polyvinylidene fluoride (PVDF), polytetrafluoroethylene (PTFE) and a polyvinylidene fluoride-based copolymer such as PVDF-HFP, and specifically polytetrafluoroethylene (PTFE).

In an embodiment of the present disclosure, the electrode active material, the electrode conductive material and the electrode binder may be mixed at a weight ratio (the electrode active material: the electrode conductive material : the electrode binder) of 80 parts by weight to 99 parts by weight: 0.5 parts by weight to 10 parts by weight : 0.5 parts by weight to 10 parts by weight, and specifically 90 parts by weight to 99 parts by weight : 0.5 parts by weight to 5 parts by weight : 0.5 parts by weight to 10 parts by weight.

In an embodiment of the present disclosure, the electrode active material layer may include the composite particles for the electrode, the powder for the electrode or a combination thereof. In the present disclosure, when the dry electrode includes the composite particles for the electrode or the powder for the electrode or a combination thereof as the electrode active material on the current collector for the dry electrode, the electrode interfacial resistance characteristics may be improved. In this instance, because the composite particles for the dry electrode and the powder for the dry electrode are the components of the dry electrode, they may be the same as described above.

<Method for manufacturing composite particles for electrode>

In an embodiment of the present disclosure, the composite particles for the electrode included in the electrode active material layer may be manufactured by a method including the steps of mixing the electrode active material and the electrode binder in a dispersion medium to prepare a slurry; and spray drying the slurry.

First, the electrode active material and the electrode binder, and optionally the electrode conductive material or an additive are dispersed or dissolved in the dispersion medium (the solvent for the electrode binder) to obtain the slurry in which the electrode conductive material and/or the additive is dispersed or dissolved together with the electrode active material and the electrode binder.

The dispersion medium used to obtain the slurry is, the most suitably, water, but an organic solvent may be used. The organic solvent may include, for example, alkylalcohols such as methylalcohol, ethylalcohol or propylalcohol; alkylketones such as acetone or methylethylketone; ethers such as tetrahydrofuran, dioxane or diglyme; amides such as diethylformamide, dimethylacetoamide, N-methyl-2-pyrrolidone (hereinafter referred to as NMP) or dimethylimidazolidinone; sulfur-based solvents such as dimethylsulfoxide or sulfolane, but alcohols are preferred. When the organic solvent having lower boiling point than water is used together, the drying rate may increase during the fluid bed granulation. Additionally, because the negative electrode binder may change in dispersibility or solubility, the viscosity or flowability of the slurry may be adjusted according to the amount or type of the dispersion medium, thereby improving production efficiency.

The dispersion medium used to prepare the slurry may be present in such an amount that the solid concentration of the slurry is usually in a range between 1 wt% and 50 wt%, or 5 wt% and 50 wt%, or 10 wt% and 30 wt%.

The electrode active material and the electrode binder may be dispersed or dissolved in the dispersion medium any method or order, and the method may include, for example, a method that adds the electrode active material and the electrode binder to the dispersion medium and mixes them together, or a method that dissolves or disperses the electrode binder in the dispersion medium, adds the electrode active material and mixes them together. When the slurry includes the electrode conductive material and/or the additive, when feeding the electrode active material, these components may be fed. The mixing means may include, for example, a ball mill, a sand mill, a bead mill, a pigment dispersion machine, a stone mill, an ultrasonic dispersion machine, a homogenizer or a planetary mixer. The mixing may be, for example, performed in a range between room temperature and 80°C for 10 minutes to a few hours.

Subsequently, the slurry is spray-dried. The spray drying method is a method that dries the slurry while spraying the slurry in hot air. A spraying process of equipment used in the spray drying method may include a rotary disc process or a pressure nozzle process. The rotary disc method is a method which feeds the composition into almost the center of the disc that rotates at high speed, urges the composition to the periphery of the disc by the centrifugal force of the disc, to create mist and dries it. The rotational speed of the disc relies on the size of the disc, but is usually from 5,000 rpm to 35,000 rpm, and preferably from 15,000 rpm to 30,000 rpm. Meanwhile, the pressure nozzle method is a method which sprays the composition through the thin nozzle together with air or a liquid such as a high pressure fluid to convert into mist and dries it.

In an embodiment of the present disclosure, the temperature of the hot air may be controlled to 80°C to 250°C, and preferably 175°C to 220°C, on the basis of the reactor inlet temperature (input) to form the composite particle structure having a high amount of electrode binder on the surface. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, in the spray drying, the outlet temperature (the temperature of hot air released from the reactor) of the reactor may be controlled to 90°C to 130°C.

When the outlet temperature and/or a difference $\triangle T$ between inlet temperature and outlet temperature is low, drying is not properly performed, so particles containing a large amount of remaining solvent may be formed, thereby failing to form spherical particles of uniform shape, resulting in agglomeration of composite particles or irregular granules. Meanwhile, when the inlet temperature is too high and $\triangle T$ is large, granulation fails due to overdrying and particles having very small particle size $D_{50}$ and low aspect ratio may be produced. Accordingly, to control the particle size to the proper level along with high aspect ratio and less binder agglomeration, it is necessary to control the inlet temperature and the outlet temperature within the proper range.

Additionally, heating may be optionally performed to harden the surface of the result obtained by the spray drying, i.e., the composite particles, and in this instance, the thermal treatment temperature may usually range from 80°C to 300°C.

In an embodiment of the present disclosure, the powder for the electrode included in the electrode active material layer may be manufactured by a method including the steps of preparing a mixture including the electrode active material, the electrode conductive material and the electrode binder; blending the mixture in a temperature range between 70°C and 200°C under the pressure above atmospheric pressure to fibrillate the electrode binder so as to form a mixture mass; and grinding the mixture mass to obtain the powder for the electrode.

<Method for manufacturing dry electrode>

According to an embodiment of the present disclosure, the method for manufacturing the dry electrode may include the steps of: applying the composite particles for the electrode manufactured by the above-described method onto the current collector for the dry electrode; and pressing the composite particles for the electrode to form the electrode active material layer (pressing).

First, the composite particles for the electrode are applied to the current collector. In this instance, the current collector for the dry electrode has the primer layer including the conductive material and the binder on all or part of at least one surface thereof as described above.

In an embodiment of the present disclosure, the prepared composite particles for the electrode may be fed into a roll-type press forming machine by a feeding equipment, for example, a screw feeder to form the electrode active material layer, and in this instance, at the same time with the supply of the composite particles, the current collector for the dry electrode may be transferred to the rolls of the press forming machine to directly stack the electrode active material layer on the current collector for the dry electrode. Alternatively, the composite particles for the electrode may be applied to the current collector and evenly spread using a blade to adjust the thickness, and in the pressing step, may be shaped using the press machine to form the electrode active material layer.

In an embodiment of the present disclosure, the pressing step may be performed by a roll pressing process. The roll pressing process may be performed by placing an object (the electrode) between two cylindrical rolls vertically arranged in parallel at a small interval while rotating each roll in the same direction or opposite directions.

In an embodiment of the present disclosure, the method for manufacturing the dry electrode may include the steps of calendering the powder for the electrode manufactured by the above-described method to make a mixture film so as to form the electrode active material layer, and placing and laminating the electrode active material layer including the mixture film on at least one surface of the current collector for the dry electrode of the present disclosure to manufacture the dry electrode.

<Lithium secondary battery>

The present disclosure provides a lithium secondary battery.

In an embodiment of the present disclosure, the lithium secondary battery may include a positive electrode, a negative electrode, a separator interposed between the positive electrode and the negative electrode and an electrolyte, and at least one of the positive electrode or the negative electrode may include the current collector for the dry electrode described above in the present disclosure. Preferably, the negative electrode may include the current collector for the dry electrode.

The separator is interposed between the positive electrode and the negative electrode and plays a role in electrically insulating the positive electrode from the negative electrode and allowing lithium ions to pass therethrough. The separator may include any separator commonly used in the field of lithium secondary batteries without limitation.

The separator may include any porous polymer film commonly used as separators, for example, porous polymer films of polyolefin-based polymer such as ethylene homopolymer, propylene homopolymer, ethylene/butene copolymer, ethylene/hexene copolymer and ethylene/methacrylate copolymer as used singly or in stack. Additionally, an insulation thin film having high ion permeability and mechanical strength may be used. The separator may include a safety reinforced separator (SRS) having a thin coating of ceramic material on the separator surface. Besides, the separator may include commonly used porous nonwoven fabrics, for example, nonwoven fabrics of high melting point glass fibers or polyethyleneterephthalate fibers, but is not limited thereto.

The electrolyte solution includes a lithium salt as the electrolyte and an organic solvent to dissolve it.

The lithium salt may include, without limitation, those commonly used in electrolyte solutions for secondary batteries, and for example, an anion of the lithium salt may include at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The organic solvent included in the electrolyte solution may include any commonly used organic solvent without limitation, and typically may include at least one selected from the group consisting of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylenecarbonate, sulfolane, gamma-butyrolactone, propylene sulfite and tetrahydrofuran.

In particular, among these carbonate-based organic solvents, cyclic carbonate such as ethylenecarbonate and propylenecarbonate is a high viscosity organic solvent, and due to a high dielectric constant, it dissolves the lithium salt in the electrolyte well, and more preferably, when the cyclic carbonate is mixed with low viscosity and low dielectric constant linear carbonate such as dimethylcarbonate and diethylcarbonate at an optimal ratio, the electrolyte solution having high electrical conductivity may be prepared.

Optionally, the electrolyte solution stored according to the present disclosure may further include an additive such as an overcharge inhibitor included in the commonly used electrolyte solutions.

The lithium secondary battery according to an embodiment of the present disclosure may be completed by placing the positive electrode and the negative electrode with the separator interposed between them to form an electrode assembly, putting the electrode assembly in, for example, a pouch, a cylindrical battery case or a prismatic battery case, and injecting the electrolyte. Alternatively, the lithium secondary battery may be completed by stacking the electrode assembly and filling it with the electrolyte solution, placing the obtained result in the battery case, and sealing the battery case.

The lithium secondary battery according to the present disclosure may be included in a battery module as a unit cell, and the battery module may be used in a battery pack and a device including the battery pack as a power source. Specific examples of the device may include an electric vehicle, a hybrid electric vehicle, a plug-in hybrid electric vehicle or an energy storage system, but is not limited thereto.

Hereinafter, the present disclosure will be described in more detail through examples, but the following examples are provided to describe the present disclosure for illustrative purposes, and the scope of the present disclosure is not limited thereto.

Example 1

<Manufacture of current collector for dry electrode>

30 parts by weight of acetylene black (Denka, Li250) as a conductive material and 70 parts by weight of styrene-butadiene rubber (SBR)(LG Chem., AD-B31, $T_g$: -15°C) as a binder resin were mixed in water as a dispersion medium to prepare a primer layer slurry. In this instance, a ratio of amounts of the conductive material and the binder resin in the slurry was equal to a ratio of amounts of the conductive material and the binder resin in a primer layer that will be formed afterwards. In this instance, the true density of the binder resin used was 0.9 g/ml, and TABLE 1 below summarizes the particle size, the BET specific surface area, the bulk density and the true density of the conductive material used.

The prepared primer layer slurry was applied to one surface of a 10 $\mu$m-thick copper current collector (SK Nexilis, STN-B Grade) and dried at 130°C for 2 minutes to form a current collector for a dry electrode having the primer layer on the front surface of the copper current collector. In this instance, it was confirmed that the thickness of the primer layer formed on the front surface of the copper current collector was 1.5 $\mu$m.

<Manufacture of electrode (negative electrode)>

Natural graphite and artificial graphite were prepared as a negative electrode active material, carbon black as a negative electrode conductive material, carboxymethyl cellulose as a negative electrode dispersant, and a modified styrene butadiene copolymer as a negative electrode binder were mixed at a weight ratio of 95.6:1.0:1.1:2.3 in water as a dispersion medium using a homogenizer to prepare a slurry with viscosity of about 1,000 cPs. The as-prepared slurry was fed into a spray dryer together with hot air in the pressure range condition of -40 mmH$_2$O to dry it. In this instance, the spray dryer was controlled to the inlet temperature of 180°C, the outlet temperature of 90°C, and the rotational speed of 18,000 rpm. The obtained composite particles for the electrode were sieved using an industrial sieve to remove large particles of 150 $\mu$m or more, and small particles of less than 40 $\mu$m was separated again. The separated small particles were mixed with the composite particles for the electrode free of large particles, to finally prepare composite particles for the negative electrode including a larger amount of small particles than the previous composite particles for the electrode.

The as-prepared composite particles for the electrode were evenly applied to one surface of the current collector for the dry electrode having the primer layer in an amount of 400 mg per 25cm$^2$ of the current collector using a thickness adjustment bar, and pressed by a roll-to-roll hot roll forming machine at the speed of 2 m per minute at 60°C under the pressure of 0.7 ton per cm to form a negative electrode active material layer, so as to manufacture a negative electrode.

Examples 2 to 4 and Comparative Examples 1 and 2

Examples 2 to 4 and Comparative Examples 1 and 2 were performed in the same way as Example 1 except that the conductive material having the properties of TABLE 1 below was used.

[TABLE 1]

| Classification | Example 1 | Example2 | Example3 | Example4 | Comparative Example1 | Comparative Example2 |
|---|---|---|---|---|---|---|
| Type of conductive material | Li250 (carbon black-based) | SuperC65 (carbon black-based) | Li400 (carbon black-based) | SFG6L (graphite-based) | Li100 (carbon black-based) | Li435 (carbon black-based) |
| Particle size of conductive material (d$_{50}$, nm) | 37 | 40 | 48 | 3500 | 35 | 23 |
| BET specific surface area (m$^2$/g) | 58 | 63 | 39 | 17 | 68 | 133 |
| Bulk density of conductive material (g/ml) | 0.08 | 0.067 | 0.15 | 0.187 | 0.04 | 0.05 |
| True density of conductive material (g/ml) | 1.95 | 1.95 | 1.95 | 2.23 | 1.95 | 1.95 |
| Bulk density of conductive material/True density of binder resin | 0.089 | 0.074 | 0.17 | 0.21 | 0.044 | 0.056 |

Experimental Examples 1 and 2

Experimental Example 1: Measurement of adhesion strength at interface between current collector and electrode

A double-sided tape was attached to a slide glass of 25 mm X 75 mm size, each electrode of Examples 1 to 4 and Comparative Examples 1 and 2 punched into a size of 20 mm X 100 mm was adhered thereto, and the force required to peel the electrode 80 mm long from the slide glass when pulling at 100 mm/min using a UTM (LLOYD) machine was measured, and TABLE 2 below summarizes the measurements. In this instance, adhesion strength is an average force measured in the range between 20 mm and 40 mm, and a measurement angle of the slide glass and the electrode was 90°.

Experimental Example 2: Measurement of interfacial resistance of electrode

Interfacial resistance was measured for each electrode of Examples 1 to 4 and Comparative Examples 1 and 2 punched into a size of 50 mm X 70 mm in 10 Ω (10 mA), speed (Slow) measurement conditions by using a resistance measurement machine (HIOKI MP Tester, RM2611, RM9003, RM9004), and TABLE 2 summarizes the measurements.

[TABLE 2]

| Classification | Example 1 | Example 2 | Example 3 | Example 4 | Comparative Example 1 | Comparative Example 2 |
|---|---|---|---|---|---|---|
| Electrode interfacial resistance ($\Omega$ cm$^2$) | 0.030 | 0.026 | 0.016 | 0.014 | 0.054 | 0.049 |
| Adhesion strength (gf/20 mm) | 78 | 64 | 81 | 83 | 37 | 30 |

According to TABLE 2, it was confirmed that compared to the current collectors of Comparative Examples 1 and 2, the current collectors of Example 1 to 4 had lower electrode interfacial resistance and improved resistance characteristics. Additionally, it was confirmed that the current collectors of Examples 1 to 4 had higher adhesion strength at the interface between the current collector and the electrode than the current collectors of Comparative Examples 1 and 2.

Method for measuring other properties

The particle size of the conductive material, the BET specific surface area, the bulk density of the conductive material and the true density of the conductive material/the binder resin were measured by the following method:

<Measurement of particle size ($d_{50}$)>

The particle size $d_{50}$ of the conductive materials of Examples 1 to 4 and Comparative Examples 1 and 2 was measured by dispersing in a dispersion medium, feeding into a commercially available laser diffraction particle size measurement device (Microtrac MT 3000), irradiating ultrasound waves of about 28 kHz with the output of 60W to obtain a cumulative particle size distribution graph and measuring a particle size at 50% of the cumulative particle size distribution of particles.

<Measurement of BET specific surface area>

The BET specific surface area of the conductive materials of Examples 1 to 4 and Comparative Examples 1 and 2 was measured from the amount of nitrogen gas adsorbed under the liquid nitrogen temperature (77K) by using BEL Japan's BELSORP-mini II.

<Measurement of bulk density>

The bulk density of the conductive materials of Examples 1 to 4 and Comparative Examples 1 and 2 was measured by putting about 100g of conductive material into a funnel-type bulk density measurement machine and measuring the weight of the conductive material present in a 100 ml container after flowing down into the container.

<Measurement of true density>

The true density of the conductive material and the binder resin was measured using a true density measurement machine (Gas Pycnometer, G PYC-100, PMI, USA).

<Measurement of glass transition temperature (Tg)>

The glass transition temperature of the binder resin was measured using DSC equipment (TA instrument, DSC 2920).

Experimental Examples 3 to 5

Example 5: Manufacture of monocell

$Ni_{0.90}Co_{0.05}Mn_{0.05}$ as a positive electrode active material, carbon black as a positive electrode conductive material and PVdF as a positive electrode binder were mixed at 96:2:2 in an N-methylpyrrolidone solvent to prepare a positive electrode slurry, and the positive electrode slurry was applied to one surface of an aluminum current collector, followed by drying and rolling at the temperature of 130°C to manufacture a positive electrode.
Subsequently, a porous polyethylene separator was placed between the positive electrode and the negative electrode of Experimental Example 1 to make an electrode assembly, the electrode assembly was placed in a case, and an electrolyte solution was injected into the case to manufacture a lithium secondary battery. In this instance, the electrolyte solution containing 1.0M lithium hexafluorophosphate ($LiPF_6$) dissolved in an organic solvent of ethylenecarbonate/ethylmethylcarbonate/diethylcarbonate (a mix volume ratio of EC/EMC/DEC=3/4/3) was used to manufacture a monocell.
The monocell underwent formation charging/discharging and initial gas was removed to prepare for monocell evaluation.

Comparative Example 3: Manufacture of monocell

Natural graphite and artificial graphite as a negative electrode active material, carbon black as a negative electrode conductive material, carboxymethylcellulose as a negative electrode dispersant, modified styrene butadiene copolymer as a negative electrode binder were mixed at a weight ratio of 95.6:1.0:1.1:2.3 in water as a dispersion medium to prepare a negative electrode slurry. The as-prepared negative electrode slurry was evenly applied to the current collector for the dry electrode manufactured in Example 1 in an amount of 400 mg per 25 $cm^2$ of the current collector by using a thickness adjustment bar, and pressed using a roll-to-roll hot press forming machine at the rate of 2 m per minute in the conditions of the pressure of 0.7 ton per cm, 60°C to form a negative electrode active material layer, so as to manufacture a negative electrode.
$Ni_{0.90}Co_{0.05}Mn_{0.05}$ as a positive electrode active material, carbon black as a positive electrode conductive material and PVdF as a positive electrode binder were mixed at 96:2:2 in an N-methylpyrrolidone solvent to prepare a positive electrode slurry, and the positive electrode slurry was applied to one surface of an aluminum current collector, followed by drying and rolling at 130°C to manufacture a positive electrode.
Subsequently, a porous polyethylene separator was placed between the positive electrode and the negative electrode to manufacture an electrode assembly, the electrode assembly was placed in a case, and an electrolyte solution was injected into the case to manufacture a lithium secondary battery. In this instance, the electrolyte solution containing 1.0M lithium hexafluorophosphate ($LiPF_6$) dissolved in an organic solvent of ethylenecarbonate/ethylmethylcarbonate/-diethylcarbonate (a mix volume ratio of EC/EMC/DEC=3/4/3) was used to manufacture a monocell.
The monocell underwent formation charging/discharging and initial gas was removed to prepare for monocell evaluation.

Experimental Example 3: Measurement of initial DCIR

The monocells of Experimental Example 5 and Comparative Example 3 were charged in the charging conditions of 4.2V 0.33C CC/CV, 0.05 C Cut-off, and discharged in the discharging conditions of 2.0V 0.33C CC, 2.5V cut-off. Subsequently, initial DCIR was measured at SOC 50 in 2.5 C 30s pulse conditions, and TABLE 3 below summarizes the measurements.

Experimental Example 4: HPPC discharge

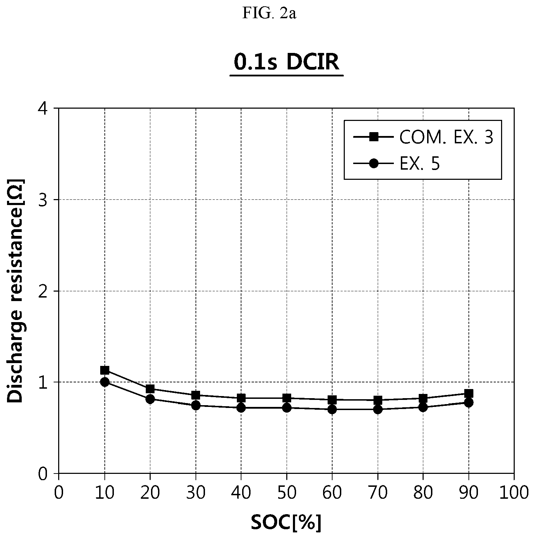

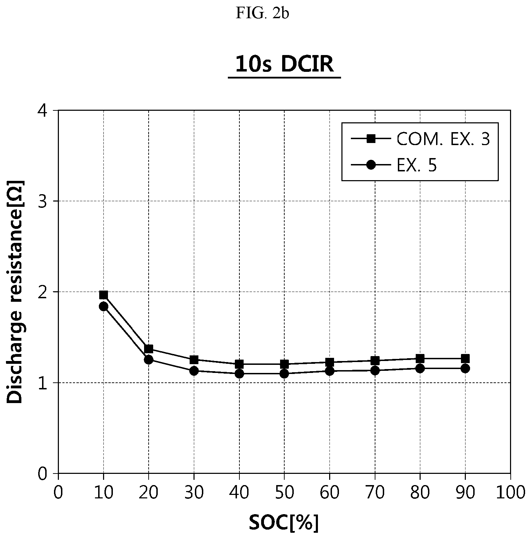

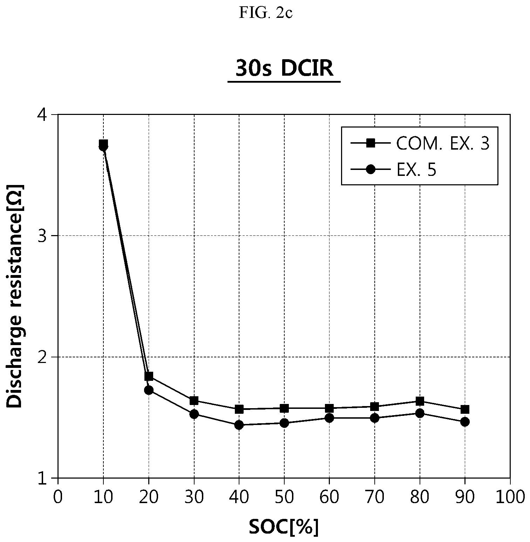

Discharge resistance vs SoC was measured by performing a hybrid pulse power characterization (HPPC) test on each monocell of Experimental Example 5 and Comparative Example 3. In this instance, each monocell was charged in the conditions of 4.2V 0.33C CC/CV, 0.05 C Cut-off, and discharged in 2.5C 30s pulse conditions at SOC 90, 80, 70, 60, 50, 40, 30, 20, 10, followed by 30 min-stabilization, and discharge resistance (Ohm) of the monocell was measured at each SoC step. FIGS. 2a to 2c show the measurements.

[TABLE 3]

|  | Comparative Example 3 | Example 5 |
|---|---|---|
| 0.1s | 0.803 | 0.706 |
| 10s | 1.187 | 1.079 |
| 30s | 1.556 | 1.446 |

According to TABLE 3 and FIGS. 2a to 2c, it was confirmed that Example 5 had a lower initial DCIR value than Comparative Example 3. That is, it was confirmed that the initial DCIR value of Example 5 including the negative electrode manufactured by the dry method was lower than that of Comparative Example 3 including the negative electrode having the same composition manufactured by the wet method, and the electrode active material layer formed by the dry method on the current collector for the dry electrode had improved resistance characteristics compared to the electrode active material layer formed by the wet method.

Experimental Example 5: Measurement of cycling characteristics

The monocells of Experimental Example 5 and Comparative Example 3 were charged at the temperature of 45°C in the charging conditions of 4.2V 0.33C CC/CV, 0.05C Cut-off, and discharged in the discharging conditions of 2.0V, 0.33C CC, 2.5V Cut-off. The charging and discharging was repeatedly performed 100 cycles and 200 cycles. TABLE 4 and TABLE 5 below summarize the initial capacity retention and DCIR value, 100th capacity retention and DCIR value, 200th capacity retention and DCIR value measured for each monocell. In this instance, the DCIR measurement was conducted at SOC 50 in 2.5 C 30s pulse conditions.

[TABLE 4]

|  | Example 5 | Comparative Example 3 |
|---|---|---|
| Initial capacity (mAh) | 77.77 | 78.75 |
| Capacity in 100 cycles (mAh) | 72.61 | 73.48 |
| 100th capacity retention (%) | 93.4 | 93.3 |
| Capacity in 200 cycles (mAh) | 69.84 | 70.56 |
| 200th capacity retention (%) | 89.8 | 89.6 |

[TABLE 5]

|  | Example 5 | Comparative Example 3 |
|---|---|---|
| Initial DCIR (m$\Omega$) | 1.074 | 1.176 |
| Initial DCIR in 100 cycles (m$\Omega$) | 1.220 | 1.930 |
| 100th DCIR increase (%) | 13.6 | 64.1 |
| Initial DCIR in 200 cycles (m$\Omega$) | 1.342 | 2.338 |
| 200th DCIR increase (%) | 25.0 | 98.8 |

According to TABLE 4, the monocells of Example 5 and Comparative Example 3 exhibited similar capacity retention, but according to TABLE 5, the DCIR increase of the monocell of Example 5 was less than that of the monocell of Comparative Example 3, and the inclusion of the electrode active material layer formed by the dry method on the current collector for the dry electrode achieved improved resistance characteristics compared to the inclusion of the electrode active material layer formed by the wet method.

**Claims**

1. A current collector for a dry electrode comprising:

 a metal foil for the current collector, and a primer layer on at least one surface of the metal foil,
 wherein the primer layer includes a binder resin and a conductive material, and
 wherein the conductive material has a bulk density of 0.055 g/ml or more, and a Brunauer, Emmett and Teller (BET) specific surface area of 100 $m^2$/g or less.

2. The current collector for the dry electrode according to claim 1,
 wherein a ratio of the bulk density of the conductive material to a true density of the binder resin is 0.06 or more.

3. The current collector for the dry electrode according to claim 1,

wherein the primer layer includes the binder resin and the conductive material at a weight ratio of from 20:80 to 80:20.

4. The current collector for the dry electrode according to claim 1,
   wherein the conductive material has an average particle size ($d_{50}$) of 30 nm or more.

5. The current collector for the dry electrode according to claim 1,
   wherein the conductive material has an increasing concentration gradient in a direction toward the current collector along a thickness direction of the primer layer.

6. The current collector for the dry electrode according to claim 1,
   wherein the conductive material includes a carbon material.

7. The current collector for the dry electrode according to claim 1,
   wherein the primer layer includes the binder resin in an amount of 20 wt% or more based on a total weight of the primer layer.

8. The current collector for the dry electrode according to claim 1,
   wherein the binder resin has a glass transition temperature (Tg) ranging from -40°C to 25°C.

9. The current collector for the dry electrode according to claim 1,
   wherein the binder resin includes at least one selected from the group consisting of a styrene butadiene rubber (SBR), a butadiene rubber (BR), a nitrile butadiene rubber (NBR), a styrene butadiene styrene block copolymer (SBS), a styrene ethylene butadiene block copolymer (SEB), a styrene-(styrene butadiene)-styrene block copolymer, a natural rubber (NR) and an isoprene rubber (IR).

10. An electrode comprising:

    the current collector for the dry electrode according to any one of claims 1 to 9; and
    an electrode active material layer on at least one surface of the current collector for the dry electrode.

11. The electrode according to claim 10,
    wherein the electrode active material layer includes composite particles for the electrode, a powder for the electrode or a combination thereof.

12. A lithium secondary battery comprising:

    a positive electrode, a negative electrode, a separator between the positive electrode and the negative electrode, and an electrolyte,
    wherein at least of the positive electrode or the negative electrode includes the current collector for the dry electrode according to any one of claims 1 to 9.

FIG. 1

FIG. 2a

## 0.1s DCIR

FIG. 2b

## 10s DCIR

FIG. 2c

## 30s DCIR

## INTERNATIONAL SEARCH REPORT

| International application No. |
|---|
| **PCT/KR2024/018107** |

| A. | CLASSIFICATION OF SUBJECT MATTER |
|---|---|

**H01M 4/66**(2006.01)i; **H01M 4/13**(2010.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 4/66(2006.01); C01B 32/20(2017.01); H01M 10/42(2006.01); H01M 4/04(2006.01); H01M 4/139(2010.01); H01M 4/1391(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 건식 전극(dry electrode), 집전체(current collector), 프라이머층(primer layer), 도전재(conductive material), 바인더(binder), 접착력(adhesion), 계면 저항(interfacial resistance)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0026294 A (LG ENERGY SOLUTION, LTD.) 24 February 2023 (2023-02-24)<br>See paragraphs [0041], [0054], [0061], [0074], [0076], [0078] and [0084]; and claims 12-14. | 1-12 |
| A | CN 116470066 A (GUIZHOU MEILING POWER SUPPLY CO., LTD.) 21 July 2023 (2023-07-21)<br>See entire document. | 1-12 |
| A | KR 10-2022-0064389 A (CONTEMPORARY AMPEREX TECHNOLOGY CO., LIMITED) 18 May 2022 (2022-05-18)<br>See entire document. | 1-12 |
| A | CN 112786839 A (SVOLT ENERGY TECHNOLOGY (WUXI) CO., LTD.) 11 May 2021 (2021-05-11)<br>See entire document. | 1-12 |
| PX | KR 10-2024-0102909 A (LG ENERGY SOLUTION, LTD.) 03 July 2024 (2024-07-03)<br>See paragraphs [0160], [0185], [0188], [0189] and [0203]; and claims 1 and 10. | 1-12 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 February 2025** | **21 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/018107**

| Patent document cited in search report | | | Publication date (day/month/year) | Patent family member(s) | | | Publication date (day/month/year) |
|---|---|---|---|---|---|---|---|
| KR | 10-2023-0026294 | A | 24 February 2023 | US | 2023-0099713 | A1 | 30 March 2023 |
| CN | 116470066 | A | 21 July 2023 | None | | | |
| KR | 10-2022-0064389 | A | 18 May 2022 | CN | 113228341 | A | 06 August 2021 |
| | | | | CN | 113228341 | B | 23 June 2023 |
| | | | | EP | 3859827 | A1 | 04 August 2021 |
| | | | | EP | 3859827 | A4 | 11 August 2021 |
| | | | | EP | 3859827 | B1 | 17 August 2022 |
| | | | | JP | 2022-540521 | A | 15 September 2022 |
| | | | | JP | 7222147 | B2 | 14 February 2023 |
| | | | | KR | 10-2529777 | B1 | 09 May 2023 |
| | | | | US | 11961993 | B2 | 16 April 2024 |
| | | | | US | 2021-0336244 | A1 | 28 October 2021 |
| | | | | WO | 2021-109133 | A1 | 10 June 2021 |
| CN | 112786839 | A | 11 May 2021 | CN | 112786839 | B | 15 April 2022 |
| KR | 10-2024-0102909 | A | 03 July 2024 | CN | 118805267 | A | 18 October 2024 |
| | | | | WO | 2024-144216 | A1 | 04 July 2024 |

Form PCT/ISA/210 (patent family annex) (July 2022)

**EP 4 773 254 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230158612